# EUROPÄISCHE PATENTSCHRIFT

(11) **EP 1 074 828 B1**
(45) Veröffentlichungstag und Bekanntmachung des Hinweises auf die Patenterteilung: **07.01.2004**
(21) Anmeldenummer: 00890240.5
(22) Anmeldetag: 03.08.2000
(51) Int. Cl.: G01L 23/22

(54) **Zündkerze mit einer Druckmesseinrichtung**
Spark plug with pressure measuring device
Bougie avec dispositif de mesure de pression

(30) Priorität: 05.08.1999 AT 134999
(43) Veröffentlichungstag der Anmeldung: 07.02.2001
(73) Patentinhaber: AVL List GmbH, 8020 Graz (AT)
(72) Erfinder: Glaser, Josef, Dr., 8047 Graz (AT); Leuprecht, Gernot, Dr., 8010 Graz (AT)
(74) Vertreter: Babeluk, Michael, Dipl.-Ing. Mag.

(56) Entgegenhaltungen:
- EP-A- 0 441 157
- GB-A- 835 158

## Beschreibung

Die Erfindung betrifft eine Zündkerze mit einer durchgehenden, außermittig im Gehäuse ausgebildeten Längsbohrung zur Aufnahme eines Isolators, mit Gehäusebereichen von unterschiedlicher Wandstärke, wobei in einem Bereich größerer Wandstärke eine Druckmeßeinrichtung angeordnet ist.

Eine wesentliche Größe für die Beurteilung des Verbrennungsablaufes von Verbrennungskraftmaschinen ist der im Brennraum herrschende Druck. Für Forschung und Entwicklung, Motormanagement bzw. Motorregelungssysteme muß daher der Brennraum der Druckmessung zugängig gemacht werden. Meist ist es wünschenswert, für die Druckmessung keine zusätzliche Bohrung im Brennraum vorsehen zu müssen. Eine Möglichkeit diese zusätzliche Bohrung zu vermeiden besteht darin, eine Zündkerze zusätzlich für die Druckmeßfunktion zu adaptieren.

Bekannte Vorrichtungen dieser Art kann man im wesentlichen in zwei Gruppen einteilen. Eine Gruppe verwendet sogenannte Kraftmeßscheiben, die an Stelle einer Dichtung oder am Ort der Dichtung der Zündkerze eingebaut werden und den auf die Zündkerze wirkenden Druck als Änderung der Dichtkraft messen. Ein Nachteil derartiger Meßsystem besteht vor allem darin, dass sich das Kerzengehäuse sowie die Einschraubstelle der Zündkerze durch Temperaturunterschiede während des Betriebes der Brennkraftmaschine unterschiedlich verformen, wobei diese Verformungen unmittelbar auf das Kraftmeßelement wirken und erhebliche Meßfehler verursachen.

Die zweite Gruppe verwendet Druckmeßeinrichtungen, welche im Gehäuse der Zündkerze angeordnet sind, wobei hier vor allem Schwierigkeiten im Zusammenhang mit dem zur Verfügung stehenden Raum für die Druckmeßeinrichtung auftreten.

Um den zur Verfügung stehenden Platz für die Druckmeßeinrichtung zu vergrößern sind druckmessende Zündkerzen entwickelt worden, deren Längsbohrung für den Isolator außermittig im Kerzengehäuse angeordnet ist, sodass ein Bereich kleiner und ein Bereich großer Wandstärke im Kerzengehäuse gebildet wird und in letzterem die Druckmeßeinrichtung angeordnet werden kann.

Mehrere Ausführungsvarianten von asymmetrisch im Kerzengehäuse angeordneten Isolierkörpern sind aus der EP 0 441 157 A bekannt geworden. Aufgrund der asymmetrischen Anordnung des Isolators muß zur Erreichung eines zentrischen Anschlusses von Zündkabelstecker bzw. Zündspule ein gekröpfter Adapterteil verwendet werden. Durch die geänderte Lage des Hochspannungsanschlusses entsteht ein beträchtlicher Adaptierungsaufwand, speziell im Fall von immer häufiger verwendeten Zündspulen, die einzeln oder miteinander verbunden direkt über den Zündkerzen angeordnet sind. Darüber hinaus muß der Isolator - bei gegebenem Durchmesser des Kerzengehäuses - schlanker ausgeführt sein, wodurch es leicht zu einem Isolatorbruch kommen kann, wenn derartige für die Druckmessung adaptierte Zündkerzen im Zylinderkopf montiert werden. Schädlich können hier insbesondere Querkräfte durch das Montagewerkzeug werden. Beschädigungen des Isolators können auch durch die Steckkräfte beim Anschluß des Zündkerzensteckers bzw. bei der Montage der Zündspule ausgelöst werden. Eine weitere Quelle für Beschädigungen des Isolators, welche bis zum Isolatorbruch führen können, sind die Massenkräfte von Zündkerzenstecker plus Kabel, welche aufgrund von Beschleunigungen während des Motorbetriebes auftreten.

Eine Zündkerze der eingangs erwähnten Art ist aus der DE 35 14 597 A1 bekannt. Bei dieser Zündkerze ist die Längsbohrung außermittig im Gehäuse ausgebildet. Dadurch ergibt sich ein Gehäuseteil mit einer dickeren Wandstärke, in dem in einer auf die Zündkerzenachse normal stehenden Stufenbohrung ein Drucksensor angeordnet ist, welcher in direkter Verbindung mit dem Brennraum steht. Über eine parallel zur Zündkerzenachse ausgebildeten Sackbohrung, welche in eine schräg verlaufende Bohrung im Gehäuse mündet, führen die elektrischen Kontaktierungen des Drucksensors nach außen zu einer Auswerteeinrichtung. In einer zweiten Ausführungsvariante ist im dickeren Gehäuseteil, parallel zur Zündkerzenachse eine Stufenbohrung ausgebildet, welche einen Drucksensor sowie einen hülsenförmigen Anpreßteil aufnimmt. Eine Demontage der Druckmeßeinrichtung ist allerdings nur nach Entfernen des Isolatorkörpers möglich.

Aus der AT 402 116 B ist eine Zündkerze mit einem Kraftmesselement zur Messung des an der Zündkerze anliegenden Druckes bekannt. Bei Druckbeaufschlagung in axialer Richtung stützt sich der Isolierkörper der Zündkerze unter Zwischenlage des Kraftmesselementes am Kerzengehäuse ab. In einer speziellen Ausführungsvariante wird zur Reduktion der am Kraftmesselement angekoppelten Masse der Isolierkörper geteilt, und zwar in einen brennraumseitigen Teil der sich am Kraftmesselement abstützt und in einen kabelseitigen Teil, welcher unmittelbar am Gehäuse fixiert ist. Durch ein elektrisch leitendes Zwischenstück sind auch der brennraumseitige bzw. kabelseitige Teil der Innenelektrode mechanisch weitgehend entkoppelt. Zwischen den beiden Teilen des Isolierkörpers ist eine Isolierhülse angeordnet.

Aufgabe der vorliegenden Erfindung ist es, eine Zündkerze mit einer Druckmeßeinrichtung der eingangs beschriebenen Art derart weiterzubilden, dass Anschlußmaße wie bei einer herkömmlichen Zündkerze erreicht und gleichzeitig Isolatorbrüche vermieden werden.

Diese Aufgabe wird erfindungsgemäß dadurch gelöst, dass der Isolator der Zündkerze mehrteilig ausgebildet ist und zumindest aus einem den Hochspannungsanschluss aufweisenden Isolatoroberteil und einem dem Brennraum zugewandten Isolatorunterteil besteht, sowie dass zwischen dem Isolatoroberteil und dem Isolatorunterteil ein isolierendes, elastisches Füllelement angeordnet ist.

Durch die zweiteilige Ausführung des Isolators und die Anordnung eines isolierenden, elastischen Füllelementes zwischen dem Isolatoroberteil und dem Isolatorunterteil können schädliche Materialspannungen im schlanken Isolatorunterteil, ausgelöst durch Montage- oder Beschleunigungskräfte vermieden und damit die Bruchgefahr praktisch eliminiert werden. Steckund Beschleunigungskräfte können vom relativ dickwandigen Isolatoroberteil aufgenommen werden, da erfindungsgemäß zumindest der Hochspannungsanschluß und der dem Hochspannungsanschluß zugewandte Teil des Isolatoroberteils radialsymmetrisch zur Zündkerzenachse ausgebildet sind und in ihren Anschlußmaßen im wesentlichen den entsprechenden Teilen einer herkömmlichen Zündkerze entsprechen. Eine druckmessende Zündkerze gemäß Stand der Technik, mit einem asymmetrisch angeordneten Isolierkörper weist auch im oberen Bereich wesentlich geringere Wandstärken auf, darüber hinaus muß zum Anschluß des Zündkabelsteckers bzw. der Zündspule ein gekröpfter Adapterteil verwendet werden.

Das Füllelement besteht vorzugsweise aus hochtemperaturbeständigem Elastomer, beispielsweise aus Silikonkautschuk oder einem Fluorelastomer. Der Isolatoroberteil kann aus Kunststoff oder wie der Isolatoruntereil aus Keramik bestehen.

Dadurch dass der Isolatoroberteil Anschlußmaße entsprechend einer Originalzündkerze aufweist, entsteht praktisch kein Adaptierungsaufwand für die Verbindung des Zündkabels bzw. der Zündspule mit der Zündkerze. Dies ist insbesondere bei der Verwendung von Zündspulen von Vorteil, die einzeln oder miteinander verbunden direkt über den Zündkerzen angebracht sind.

Da sich der Isolatorunterteil erfindungsgemäß in geschützter Position im Kerzengehäuse befindet, kann eine sehr schlanke Ausführung gewählt werden, wodurch sich seitlich, im Bereich größerer Wandstärke des Zündkerzengehäuses neben dem Isolatorunterteil genügend Raum für die Anordnung der Druckmeßeinrichtung ergibt.

Besonders vorteilhaft ist es, eine seitliche, zur Zündkerzenachse einen Winkel von 0° bis 15°, vorzugsweise 4° bis 12° aufweisende Bohrung für die Druckmeßeinrichtung vorzusehen, welche im Bereich größerer Wandstärke neben dem Isolatorunterteil angeordnet ist. Insbesondere bei leicht geneigter Bohrung ist ein einfaches Montieren bzw. Demontieren der Druckmeßeinrichtung gewährleistet.

In einer ersten Ausführungsvariante der Erfindung ist die Druckmeßeinrichtung als eine in der seitlichen Bohrung montierbare Sonde ausgebildet.

In einer zweiten Ausführungsvariante ist vorgesehen, dass die Druckmeßeinrichtung ein in einer brennraumseitigen Ausnehmung des Gehäuses angeordnetes Druckmeßelement und eine in einer seitlichen Bohrung geführte Signalableitung aufweist.

Erfindungsgemäß kann dabei das Druckmeßelement in an sich bekannter Weise ein von einer Sensormembran mit Druck beaufschlagtes piezoelektrisches Element aufweisen, wobei die zentrale Achse der Sensormembran vorzugsweise im wesentlichen normal auf die Achse der seitlichen Bohrung gerichtet ist. Obwohl auch andere Ausrichtungen der Sensormembran möglich sind, beispielsweise eine direkt zum Brennraum gerichtete, kann bei der erwähnten Ausrichtung der Membranachse normal auf die Achse der seitlichen Bohrung ein relativ großer Druchmesser der Sensormembran gewählt werden, wodurch bessere Meßeigenschaften erzielt werden können.

Ein Vorteil der Ausführung mit integriertem Meßelement gegenüber jener mit Sonde, besteht darin, dass die schlanke Signalableitung und das flachbauende Meßelement eine Ausführung der druckmessenden Zündkerze mit kleinerem Kerzengewinde zulassen. Bei der Sondenvariante liegt die untere Grenze des Kerzengewindes aufgrund des Sondendurchmessers von ca. 4mm bei der Gewindedimension M 14. Wesentlich schlankere Sonden sind meßtechnisch nicht sinnvoll und fertigungstechnisch problematisch.

Schließlich ist es erfindungsgemäß von Vorteil, die Achse des Isolatorunterteils zur Zündkerzenachse geneigt auszuführen, so dass sich die Zündkerzenspitze der Achse der Zündkerze annähert. Durch die asymmetrische Anordnung der Längsbohrung im Kerzengehäuse ist die Mittelelektrode der Zündkerze in der Regel außerhalb der Kerzenachse angeordnet. Diese Fehlstellung kann dadurch verringert werden, dass die Achse des Isolatorunterteils zur Zündkerzenachse geneigt wird.

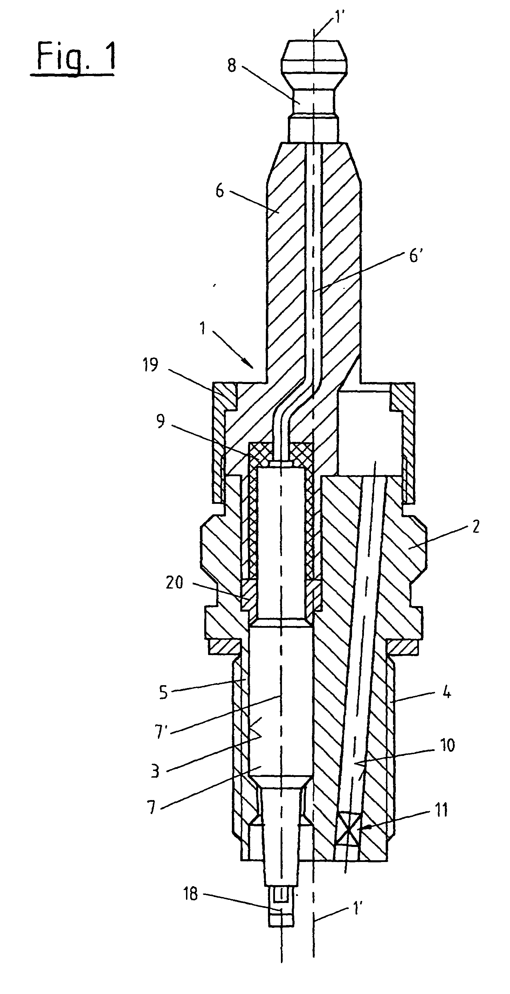

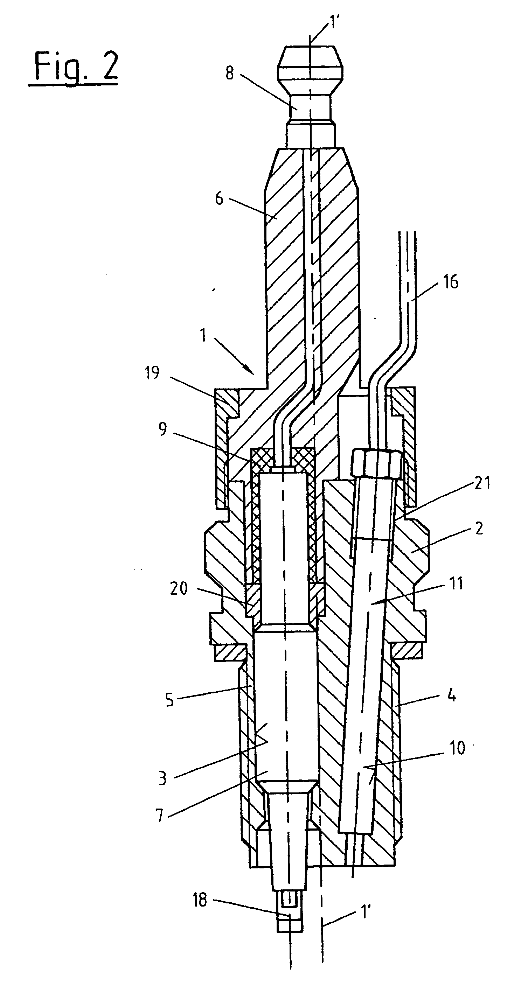

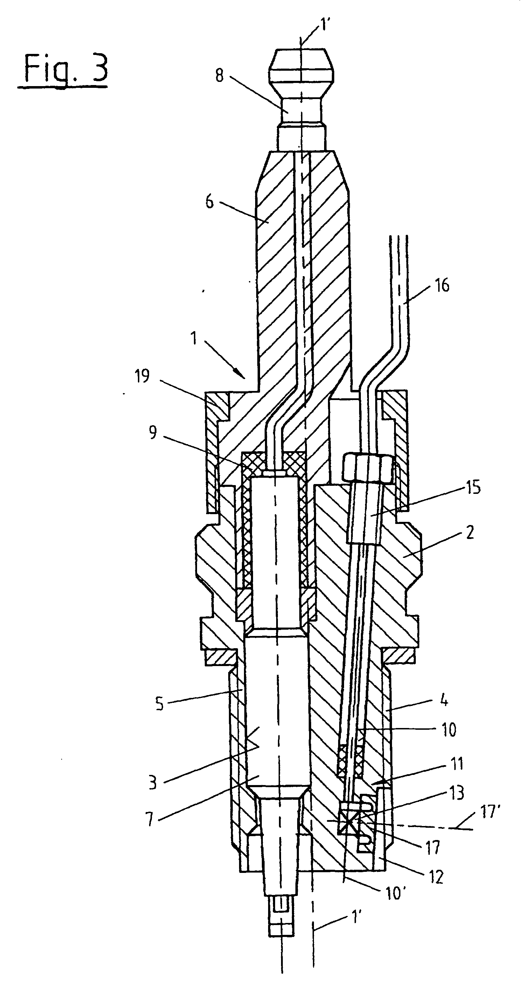

Die Erfindung wird im folgenden anhand von Zeichnungen näher erläutert. Es zeigen Fig. 1 einen Längsschnitt einer erfindungsgemäßen Zündkerze mit Druckmeßeinrichtung sowie die Fig. 2 und 3 Ausführungsvarianten in einer Fig. 1 entsprechenden Schnittdarstellung.

Die in Fig. 1 dargestellte erste Ausführungsvariante zeigt eine Zündkerze 1 mit einer durchgehenden, außermittig im Gehäuse 2 ausgebildeten Längsbohrung 3. Durch die außermittige Anordnung der Längsbohrung 3 entstehen Gehäusebereiche von unterschiedlicher Wandstärke, wobei der Bereich größerer Wandstärke mit 4 und jener mit geringerer Wandstärke mit 5 bezeichnet ist. Der Isolator der Zündkerze 1 ist mehrteilig ausgebildet und weist einen Isolatoroberteil 6 mit einem Hochspannungsanschluß 8 sowie einen dem Brennraum zugewandten Isolatorunterteil 7 auf. Zwischen dem Isolatoroberteil 6 und dem Isolatorunterteil 7 ist ein isolierendes, elastisches Füllelement 9 angeordnet, welches beispielsweise aus hochtemperaturbeständigem Elastomer, beispielsweise aus Silikonkautschuk oder einem Fluorelastomer, besteht. Die Achse 7' des Isolatorunterteiles 7 weist einen Abstand von der Achse 1' der Zündkerze auf, kann aber zur Zündkerzenachse 1' geneigt sein, sodass die Zündkerzenspitze 18 bzw. deren Mittelelektrode der Zündkerzenachse l'angenähert wird.

Die Achse 6' des Isolatoroberteils 6 fällt hingegen mit der Zündkerzenachse 1' zusammen, sodass der Isolatoroberteil 6 bzw. zumindest der zum Anschluß des Zündkerzensteckers bzw. der Zündspule verwendete Teil des Isolatoroberteils radialsymmetrisch und in seinen Abmessungen im wesentlichen gleich wie bei einer herkömmlichen Zündkerze ausgebildet sein kann. Dadurch ist ein problemloser Einsatz ohne zusätzliche Hilfsmittel oder Adapterteile gewährleistet.

Im Bereich 4 größerer Wandstärke des Gehäuses 2 ist neben dem Isolatorunterteil 7 eine seitliche Bohrung 10 zur Aufnahme einer Druckmeßeinrichtung 11 vorgesehen, welche Bohrung parallel zur Kerzenachse 1' oder auch in einem Winkel von bis zu 15° zur Achse 1' geneigt sein kann. Vorzugsweise werden Winkel von 4° bis 12° verwendet, da durch eine geringfügige Neigung der zur Verfügung stehende Platz im Kerzengehäuse optimal ausgenützt werden kann und auch die Montage bzw. Demontage der Druckmeßeinrichtung 11 erleichtert wird. Beispielsweise kann nach dem Entfernen der Kappe 19, mit welcher, beispielsweise über eine Schraubverbindung, der Isolatoroberteil 6 am Gehäuse 2 fixiert wird, die Bohrung 10 zugänglich gemacht werden. Der Isolatorunterteil 7 wird durch die Isolatorschraube 20 im Gehäuse 2 festgehalten.

Bei den in den Fig. 2 und 3 dargestellten Ausführungsvarianten sind gleiche oder einander entsprechende Bauteile mit gleichen Bezugszeichen versehen. So weist die Ausführungsvariante gemäß Fig. 2 eine Druckmeßeinrichtung 11 auf, die in Form einer in die Bohrung 10 einführbaren Sonde ausgebildet ist. Die Montage der Sonde im Gehäuse 2 kann beispielsweise über ein Gewinde 21 am von der Zündkerzenspitze abgewandten Ende erfolgen. Nach dem Entfernen der Kappe 19 und dem Öffnen des Montagegewindes 21 kann die Sonde am Meßkabel 16 aus der Bohrung 10 herausgezogen werden.

Bei der Ausführungsvariante gemäß Fig. 3 weist die Druckmeßeinrichtung 11 ein Druckmeßelement 13 auf, welches in einer brennraumseitigen Ausnehmung 12 des Gehäuses 2 der Zündkerze angeordnet ist. Die Ausnehmung 12 steht direkt mit dem Brennraum der Brennkraftmaschine in Verbindung. Die Signalableitung 14 ist in der seitlichen Bohrung 10 geführt, und verbindet das Druckmeßelement 13 mit einem Anschluß 15 für das Meßkabel 16.

Das Druckmeßelement 13 weist ein von einer Sensormembran 17 mit Druck beaufschlagtes piezoelektrisches Element auf, wobei die zentrale Achse 17' der Sensormembran 17 im dargestellten Ausführungsbeispiel im wesentlichen normal auf die Achse 10' der Bohrung 10 steht. Im Rahmen der Erfindung sind natürlich auch andere Ausrichtungen der Sensormembran insbesondere auch eine direkt nach unten in Richtung zum Brennraum gerichtete Membran vorstellbar.

## Patentansprüche

1. Zündkerze mit einer durchgehenden, außermittig im Gehäuse (2) ausgebildeten Längsbohrung (3) zur Aufnahme eines Isolators, mit Gehäusebereichen (4, 5) von unterschiedlicher Wandstärke, wobei in einem Bereich (4) größerer Wandstärke eine Druckmesseinrichtung (11) angeordnet ist, **dadurch gekennzeichnet, dass** der Isolator der Zündkerze (1) mehrteilig ausgebildet ist und zumindest aus einem den Hochspannungsanschluss (8) aufweisenden Isolatoroberteil (6) und einem dem Brennraum zugewandten Isolatorunterteil (7) besteht, sowie dass zwischen dem Isolatoroberteil (6) und dem Isolatorunterteil (7) ein isolierendes, elastisches Füllelement (9) angeordnet ist.

2. Zündkerze nach Anspruch 1, **dadurch gekennzeichnet, dass** das Füllelement (9) aus hochtemperaturbeständigem Elastomer, beispielsweise aus Silikonkautschuk oder einem Fluorelastomer, besteht.

3. Zündkerze nach Anspruch 1 oder 2, **dadurch gekennzeichnet, dass** zumindest der Hochspannungsanschluss (8) und der dem Hochspannungsanschluss (8) zugewandte Teil des Isolatoroberteils (6) radialsymmetrisch zur Zündkerzenachse (1') ausgebildet sind und in ihren Anschlussmaßen im wesentlichen den entsprechenden Teilen einer herkömmlichen Zündkerze entsprechen.

4. Zündkerze nach einem der Ansprüche 1 bis 3, **dadurch gekennzeichnet, dass** die Achse (7') des Isolatorunterteils (7) zur Zündkerzenachse (1') geneigt ist, so dass sich die Zündkerzenspitze (18) der Achse (1') der Zündkerze annähert.

5. Zündkerze nach einem der Ansprüche 1 bis 4, **dadurch gekennzeichnet, dass** im Bereich (4) größerer Wandstärke neben dem Isolatorunterteil (7) eine seitliche, zur Zündkerzenachse einen Winkel von 0° bis 15°, vorzugsweise 4° bis 12°, aufweisende Bohrung (10) für die Druckmesseinrichtung (11) vorgesehen ist.

6. Zündkerze nach Anspruch 5, **dadurch gekennzeichnet, dass** die Druckmesseinrichtung (11) als in der seitlichen Bohrung (10) montierbare Sonde ausgebildet ist.

7. Zündkerze nach Anspruch 5, **dadurch gekennzeichnet, dass** die Druckmesseinrichtung (11) ein in einer brennraumseitigen Ausnehmung (12) des Gehäuses (2) angeordnetes Druckmesselement (13) und eine in einer seitlichen Bohrung (10) geführte Signalableitung (14) aufweist.

8. Zündkerze nach Anspruch 7, **dadurch gekennzeichnet, dass** das Druckmesselement (13) ein von einer Sensormembran (17) mit Druck beaufschlagtes piezoelektrisches Element aufweist, wobei die zentrale Achse (17') der Sensormembran (17) vorzugsweise im wesentlichen normal auf die Achse (10') der seitlichen Bohrung (10) gerichtet ist.

## Claims

1. A spark plug with a full-length longitudinal bore (3) which is designed to hold an insulator and is positioned eccentrically in the shell (2), said shell having regions (4, 5) of varying wall thicknesses and a pressure measuring device 11 being incorporated in a region (4) of greater wall thickness, wherein the insulator of the spark plug (1) is configured as a multi-piece element and comprises at least one upper insulator piece (6) carrying the high voltage connector and one lower insulator piece (7) adjacent to the combustion chamber, and wherein an insulating intermediate element (9) of flexible material is placed between the upper insulator piece (6) and the lower insulator piece (7).

2. Spark plug as claimed in Claim 1, **wherein** the intermediate element (9) is made from high-temperature resistant elastomer material, such as a silicone rubber or a fluoroelastomer.

3. Spark plug as claimed in Claim 1 or 2, **wherein** at least the high voltage connector (8) and the part of the upper insulator piece (6) facing the high voltage connector (8) are radially symmetric to the spark plug axis (1') and have fitting dimensions essentially corresponding to the respective parts of a conventional spark plug.

4. Spark plug as claimed in any of Claims 1 to 3, **wherein** the axis (7') of the lower insulator piece (7) is inclined towards the spark plug axis (1'), such that the spark plug tip (18) is brought close to the spark plug axis (1').

5. Spark plug as claimed in any of Claims 1 to 4, **wherein** a lateral bore (10) is provided, which is designed to hold the pressure measuring device (11), and is situated in the region (4) of greater wall thickness next to lower insulator piece (7), forming an angle of 0° to 15°, and preferably 4° to 12°, with the spark plug axis.

6. Spark plug as claimed in Claim 5, **wherein** the pressure measuring device (11) is configured as a probe held in the lateral bore (10) .

7. Spark plug as claimed in Claim 5, **wherein** the pressure measuring device (11) comprises a pressure measuring element (13) seated in a recess (12) of the shell (2) adjacent to the combustion chamber and a signal lead (14) carried in a lateral bore (10).

8. Spark plug as claimed in Claim 7, **wherein** the pressure measuring element (13) is configured in a known manner as a piezoelectric element subject to pressure from a sensor membrane (17), the central axis (17') of the sensor membrane (17) preferably running essentially normal to the axis (10') of the lateral bore (10).

## Revendications

1. Bougie d'allumage comprenant un alésage longitudinal (3) continu, configuré au centre extérieur du boîtier (2), destiné à recevoir un isolateur, avec des zones de boîtier (4, 5) d'épaisseurs de paroi différentes, un dispositif indicateur de pression (11) étant disposé dans une zone (4) de paroi plus épaisse,
**caractérisée en ce que**
l'isolateur de la bougie d'allumage (1) est configuré en plusieurs parties et se compose d'au moins une partie supérieure d'isolateur (6) présentant une connexion haute tension (8) et une partie inférieure d'isolateur (7) tournée vers la chambre de combustion, et une pile amorçable (9) isolante et élastique est disposée entre la partie supérieure d'isolateur (6) et la partie inférieure d'isolateur (7).

2. Bougie d'allumage selon la revendication 1,
**caractérisée en ce que**
la pile amorçable (9) se compose d'un élastomère résistant à haute température, par exemple en caoutchouc de silicone ou en fluoroélastomère.

3. Bougie d'allumage selon la revendication 1 ou 2,
**caractérisée en ce qu'**
au moins la connexion haute tension (8) et la partie tournée vers la connexion haute tension (8) de la partie supérieure d'isolateur (6) sont symétriques radialement par rapport à l'axe de la bougie d'allumage (1') et correspondent, en mesures de connexion, essentiellement aux parties correspondantes d'une bougie d'allumage classique.

4. Bougie d'allumage selon l'une quelconque des revendications 1 à 3,
**caractérisée en ce que**
l'axe (7') de la partie inférieure d'isolateur (7) est inclinée par rapport à l'axe de bougie d'allumage (1') de telle sorte que la pointe de la bougie d'allumage (18) soit à proximité de l'axe (1') de la bougie d'allumage.

5. Bougie d'allumage selon l'une quelconque des revendications 1 à 4,
**caractérisée en ce que**
dans la zone (4) de plus grande épaisseur de paroi, à côté de la partie inférieure d'isolateur (7), est prévu un alésage (10) latéral pour le dispositif indicateur de pression (11), présentant un angle de 0° à 15°, de préférence de 4° à 12°, par rapport à l'axe de la bougie d'allumage.

6. Bougie d'allumage selon la revendication 5,
**caractérisée en ce que**
le dispositif indicateur de pression (11) configuré comme une sonde peut être assemblée dans l'alésage (10) latéral.

7. Bougie d'allumage selon la revendication 5,
**caractérisée en ce que**
le dispositif indicateur de pression (11) présente un élément indicateur de pression (13) disposé dans une entaille (12) du boîtier (2) du côté de la chambre de combustion et une dérivation de signal introduite dans un alésage latéral (10).

8. Bougie d'allumage selon la revendication 7,
**caractérisée en ce que**
l'élément indicateur de pression (13) présente un élément piézo-électrique percuté par la pression d'une membrane de capteur (17), l'axe central (17') de la membrane de capteur (17) étant dirigé normalement de préférence et essentiellement sur l'axe (10') de l'alésage latéral (10).
